# EUROPÄISCHE PATENTSCHRIFT

(11) **EP 0 923 475 B1**
(45) Veröffentlichungstag und Bekanntmachung des Hinweises auf die Patenterteilung: **07.08.2002**
(21) Anmeldenummer: 97924920.8
(22) Anmeldetag: 28.05.1997
(51) Int. Cl.: B60T 8/36

(54) **MAGNETVENTIL FÜR EINE SCHLUPFGEREGELTE, HYDRAULISCHE FAHRZEUGBREMSANLAGE**
ELECTROMAGNETIC VALVE FOR AN AUTOMOTIVE HYDRAULIC BRAKING SYSTEM WITH TRACTION CONTROL
ELECTROVANNE POUR SYSTEMES DE FREINAGE HYDRAULIQUES A SYSTEME A ANTI-PATINAGE POUR VEHICULES A MOTEUR

(30) Priorität: 03.09.1996 DE 19635693
(43) Veröffentlichungstag der Anmeldung: 23.06.1999
(73) Patentinhaber: ROBERT BOSCH GMBH, 70442 Stuttgart (DE)
(72) Erfinder: MEGERLE, Friedrich, D-71679 Asperg (DE); FRITSCH, Siegfried, D-87527 Sonthofen (DE); KIRSCHNER, Martin, D-87549 Rettenberg (DE)
(86) Internationale Anmeldenummer: DE9701075
(87) Internationale Veröffentlichungsnummer: WO9809855

(56) Entgegenhaltungen:
- EP-A- 0 679 823
- WO-A-93/07032
- DE-A- 4 030 971
- DE-A- 4 202 389
- DE-A- 4 412 648
- DE-A- 4 427 905
- DE-A- 4 441 150
- DE-A- 19 504 883
- US-A- 5 460 437

## Beschreibung

### Stand der Technik

Die Erfindung geht aus von einem Magnetventil, das zum Einsetzen in eine Aufnahmebohrung in einem Hydraulikblock einer schlupfgeregelten, hydraulischen Fahrzeugbremsanlage vorgesehen ist, nach der Gattung des Patentanspruchs 1. Es ist insbesondere als ein einem Radbremszylinder vorgeschaltetes Einlaßventil oder als einem Hauptbremszylinder und der übrigen Fahrzeugbremsanlage zwischengeschaltetes Umschaltventil vorgesehen.

Ein derartiges Ventil ist bekannt aus der DE 44 12 648. Dieses ist stabförmig ausgebildet und weist einen rotationssymmetrischen Ventilträger mit einer axialen Durchgangsbohrung auf. Zur hydraulischen Verschaltung ist der Ventilträger zum Einsetzen in eine Aufnahmebohrung eines Hydraulikblocks vorgesehen, so daß ein Einlaß an einer Stirnseite des Ventilträgers und ein Auslaß am Umfang des Ventilträgers mit Fluidkanälen des Hydraulikblocks kommunizieren, die in einer Grundfläche bzw. am Umfang in die Aufnahmebohrung münden.

In die Durchgangsbohrung des Ventilträgers ist auf der in die Aufnahmebohrung des Hydraulikblocks einzusetzenden Stirnseite ein zylindrisches Ventilsitzteil mit einer Axialbohrung eingesetzt, die in einen Ventilsitz mündet, der dem Einlaß und dem Auslaß des Magnetventils hydraulisch zwischengeschaltet ist.

Der Ventilträger steht mit einem Teil seiner Länge aus dem Hydraulikblock vor. Am vorstehenden Stirnende ist ein Ventildom angebracht, in dem ein Anker axial verschiebbar aufgenommen ist. Zur Betätigung eines axial beweglichen Ventilschließkörpers ist ein Ventilstößel am Anker angebracht, der in die Durchgangsbohrung des Ventilträgers hineinragt. Zur elektromagnetischen Betätigung ist eine Spule auf den aus dem Hydraulikblock vorstehenden Ventildom aufgesteckt.

Abgedichtet ist der Ventilträger im Hydraulikblock mittels zweier aus einem Elastomer bestehenden O-Ringe, wodurch Herstellung und Montage des bekannten Magnetventils relativ aufwendig ist, da O-Ring-Nuten im Ventilträger angebracht werden müssen und die O-Ringe vor dem Einsetzen des Magnetventils in dem Hydraulikblock in die O-Ring-Nuten eingelegt werden müssen.

Aus WO-A-93/07032 ist ein Magnetventil bekannt, welches mit dem ankerabgewandten Endabschnitt eines Ventilträgers in eine Aufnahmebohrung eines Hydraulikblocks eingesetzt ist. Innerhalb des Ventilträger-Endabschnitts ist ein Ventilsitzteil mit einer zu einem Ventilsitz eines Sitzventils führenden Längsbohrung aufgenommen.

Mündungsseitig der Aufnahmebohrung ist ein den Ventilträger gegen den Hydraulikblock abdichtender O-Ring aus einem Elastomer mit einer Stützscheibe aus Kunststoff angeordnet. Eine stirn- und innenumfangsseitig mit Blechteilen armierte Doppellippen-Manschettendichtung aus einem Elastomer ist am ankerabgewandten Stirnende des Ventilträgers angebracht. Eine radial innere Lippe der Manschettendichtung greift in die Längsbohrung des Ventilsitzteils ein. Eine radial äußere Lippe der Manschettendichtung liegt am Umfang der Aufnahmebohrung an und trennt in einer Strömungsrichtung eines Fluids zwei in die Aufnahmebohrung mündende Fluidkanäle. In der anderen Strömungsrichtung wirkt die äußere Lippe der Manschettendichtung als Rückschlagventil. Zwischen dem O-Ring und der Manschettendichtung ist außen auf den Ventilträger ein Hülsenfilterkörper aus Kunststoff aufgesteckt. Dieses bekannte Magnetventil benötigt also mehrere separate Bauteile aus unterschiedlichen Werkstoffen, um den Ventilträger gegen die Aufnahmebohrung des Hydraulikblocks und das Ventilsitzteil abzudichten. Hierdurch wird das Magnetventil verteuert und die Montage des Ventils erheblich erschwert.

### Vorteile der Erfindung

Beim erfindungsgemäßen Magnetventil mit den Merkmalen des Anspruchs 1 ist an dem in die Aufnahmebohrung im Hydraulikblock einzusetzenden Stirnende des Ventilträgers ein Endstück aus Kunststoff angebracht, das den Ventilträger am Grund und an der Mündung der Aufnahmebohrung gegenüber dem Hydraulikblock sowie dem Ventilsitzteil abdichtet und dabei in der Grundfläche und am Umfang in die Aufnahmebohrung mündende Fluidkanäle des Hydraulikblocks hydraulisch voneinander trennt. Die Herstellung des erfindungsgemäßen Magnetventils vereinfacht sich durch das Endstück aus Kunststoff gegenüber einer Abdichtung beispielsweise mittels eines O-Rings, da keine O-Ring-Nut am Ventilträger hergestellt werden muß, dieser also frei von Hinterschneidungen sein kann. Ebenfalls vereinfacht sich die Befestigung des Ventilträgers am Hydraulikblock beispielsweise durch Verstemmen oder in Self-Clinch-Technik gegenüber einem Ventil mit herkömmlicher Abdichtung mittels eines O-Rings. Es ist also kein weiteres Dichtelement oder eine fluiddichte Verstemmung des Ventilträgers im Hydraulikblock notwendig.

Die Unteransprüche haben vorteilhafte Ausgestaltungen und Weiterbildungen der im Patentanspruch 1 angegebenen Erfindung zum Gegenstand.

Vorzugsweise sind die Dichtungen gemäß Ansprüchen 2 und 3 so am Endstück angeordnet, daß sie bei Druckbeaufschlagung durch Bremsflüssigkeit stärker angedrückt werden, so daß sie auch bei hohen Drücken und auch bei hohem Differenzdruck zwischen Einlaß und Auslaß abdichten. Hierdurch wird die Abdichtung auch bei infolge Werkstoffalterung oder Temperatureinfluß nachlassender Vorspannung der Dichtungen sichergestellt.

Gemäß Anspruch 4 ist im Endstück ein Rückschlagventil integriert, wodurch auf einfache Weise eine Rückströmfunktion verwirklicht ist, die ansonsten ein separates Rückschlagventil oder eine teure und verschleißanfällige Dichtmanschette anstelle des Endstücks erfordert, welche eine Durchströmung in einer Richtung zuläßt.

Ein gemäß Anspruch 8 durch Fließpressen, insbesondere durch Kaltfließpressen hergestellte Ventilträger hat den Vorteil, daß er schnell und kostengünstig herstellbar ist. Dies hat weiterhin den Vorteil, daß ein preiswerter Umformstahl für den Ventilträger verwendbar ist, der die Eigenschaft guter Schweißbarkeit mit sich bringt.

### Zeichnung

Die Erfindung wird nachfolgend anhand zweier in der Zeichnung dargestellter Ausführungsbeispiele näher erläutert. Die beiden Figuren zeigen einen Axialschnitt durch zwei Ausführungsformen eines erfindungsgemäßen Magnetventils.

### Beschreibung der Ausführungsbeispiele

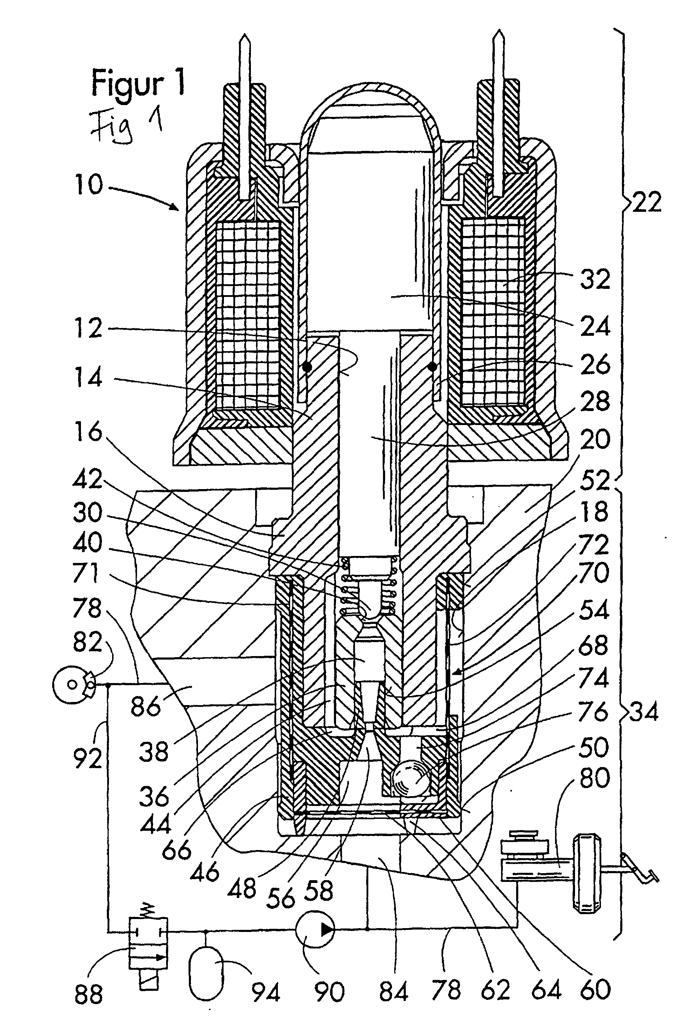

Das in Figur 1 dargestellte, erfindungsgemäße, stabförmige Magnetventil 10 weist einen rotationssymmetrischen, mit einer axialen Durchgangsbohrung 12 versehenen Ventilträger 14 auf, der ungefähr in seiner Längsmitte einen mit ihm einstückigen Befestigungsflansch 16 aufweist. Der Ventilträger 14 ist in eine Aufnahmebohrung 18 in einem Hydraulikblock 20 eingesetzt und durch Verstemmen an seinem Befestigungsflansch 16 gehalten. Ein hydraulischer Teil 34 des Magnetventils 10 befindet sich im Hydraulikblock 20, ein magnetischer Teil 22 steht vom Hydraulikblock 20 ab. Der Ventilträger 14 ist ein in einem Arbeitsgang hergestelltes Fließpreßteil ohne Hinterschneidungen.

Der magnetische Teil 22 weist an einer dem Hydraulikblock 20 abgewandten Stirnseite des Ventilträgers 14 einen axial verschiebbaren Anker 24 auf, der in einem Ventildom 26 aufgenommen ist, welcher mit dem Ventilträger 14 fluiddicht verschweißt ist. Vom Anker 24 erstreckt sich ein Ventilstößel 28 in die Durchgangsbohrung 12 des Ventilträgers 14, dessen dem Anker 24 abgewandtes Ende halbkugelförmig als Ventilschließkörper 30 ausgebildet ist. Auf den Ventildom 26 ist eine Spule 32 aufgeschoben.

Der hydraulische Teil 34 des erfindungsgemäßen Magnetventils 10 umfaßt ein zylindrisches Ventilsitzteil 36, das von einer in der Aufnahmebohrung 18 befindlichen Stirnseite her in die Durchgangsbohrung 12 des Ventilträgers 14 eingepreßt ist. Das Ventilsitzteil 36 weist eine durchgehende Axialbohrung 38 auf, die in einen konischen Ventilsitz 40 auf der dem Ventilstößel 28 zugewandten Stirnseite des Ventilsitzteils 36 mündet. Zwischen Ventilsitzteil 36 und Ventilstößel 28 ist eine Schraubendruckfeder 42 angeordnet, welche den Ventilstößel 28 vom Ventilsitzteil 36 abdrückt und somit den Ventilschließkörper 30 vom Ventilsitz 40 abhebt, das Magnetventils 10 ist also in seiner unbestromten Grundstellung geöffnet. Durch Bestromen der Spule 32 wird der Anker 24 an die im zugewandte Stirnfläche des Ventilträgers 14 angezogen, bewegt sich also zusammen mit dem Ventilstößel 28 in Richtung des Ventilsitzkörpers 36, so daß der Ventilschließkörper 30 gegen den Ventilsitz 40 gedrückt wird und das Magnetventil 10 geschlossen ist. Ein Ventilhub wird durch die Einpreßtiefe des Ventilsitzteils 36 in die Durchgangsbohrung 12 des Ventilträgers 14 eingestellt.

An einem Außenumfang des Ventilsitzteils 36 entlang führen achsparallele Abströmkanäle 44 zur in der Aufnahmebohrung 18 befindlichen Stirnseite des Ventilträgers 14. Im dargestellten Ausführungsbeispiel weist das erfindungsgemäße Magnetventil 10 drei gleichmäßig über den Umfang verteilt angeordnete Abströmkanäle 44 mit rundem Querschnitt auf. Die Abströmkanäle 44 sind in einer Wandung der Durchgangsbohrung 12, also im Ventilträger 14 angebracht.

Auf das in die Aufnahmebohrung 18 eingesetzte Stirnende des Ventilträgers 14 ist ein topfförmiges Endstück 46 aufgeschoben. Das Endstück 46 besteht aus einem thermoplastischen Kunststoff, dem ca. 20% Kohlefaser als Füllstoff zugesetzt sind. Es ist ein Spritzgießteil. Von der Innenseite eines Bodens des Endstücks 46 steht ein mit dem Endstück 46 einstükkiger, zapfenförmiger Ansatz 48 ab, der in die Axialbohrung 38 des Ventilsitzteils 36 eingreift. Das Endstück 46 weist drei mit ihm einstückige Dichtungen auf, deren erste 50 und dritte 52 umlaufend am Außenumfang ausgebildet sind und an einer Umfangswand der Aufnahmebohrung 18 nahe einem Bohrungsgrund und unterhalb des Befestigungsflansches 16 des Ventilträgers 14 abdichten. Die zweite Dichtung 54 bildet der Ansatz 48, der in der Axialbohrung 38 des Ventilsitzteils 36 dichtend anliegt. Die drei Dichtungen 50, 52, 54 liegen mit geringem Druck an. Zumindest die erste und die zweite Dichtung 50, 54 werden von der Innenseite mit Fluid beaufschlagt, liegen also bei ansteigendem Druck fester an und dichten dadurch auch bei hohem Druck und bei hohen Druckdifferenzen zuverlässig ab.

Das Endstück 46 wird einschließlich seines Ansatzes 48 von einer einen Durchlaß bildenden Axialbohrung 56 durchsetzt, welche eine Drosselstelle 58 aufweist.

Von der Außenseite ist ein Filterelement 60 am Boden des Endstücks 46 angebracht, das aus einem Kunststoff-Spritzgießteil 60 besteht, das um ein plattenförmiges Filtersieb 62 gespritzt ist. Das Filterelement 60 weist drei Stützfüße 64 auf, die am Grund der Aufnahmebohrung 18 des Hydraulikblocks 20 aufstehen und dadurch das Endstück 46 am Ventilträger 16 halten.

Die Abströmkanäle 44 münden an der in die Aufnahmebohrung 18 ragenden Stirnseite des Ventilträgers 16 in einen ringscheibenförmigen Hohlraum 66, der vom Boden des Endstücks 46 und der vom Endstück 46 umschlossenen, in der Aufnahmebohrung 18 des Hydraulikblocks 20 befindlichen Stirnseite des Ventilträgers 14 und des Ventilsitzteils 36 begrenzt ist. Von dem Hohlraum 66 verlaufen sternförmig drei Radialkanäle 68 nach außen, welche mit drei Durchbrüchen 70 in einer den Ventilträger 14 umgreifenden Umfangswandung 71 des Endstücks 46 kommunizieren. In der Umfangswandung 71 des Endstücks 46 ist ein hohlzylindrisches Filtergitter 72 umspritzt, das die Durchbrüche 70 abdeckt.

Im Boden des Endstücks 46 befindet sich ein Rückschlagventil, das aus einer achsparallelen Bohrung 74 besteht, die sich mit einer konischen Stufe zum Grund der Aufnahmebohrung 18 hin erweitert und in die eine Kugel als Ventilkörper 76 eingesetzt ist. Der Ventilkörper 76 wird vom Filterelement 60 in der Bohrung 74 gehalten.

Die hydraulische Verschaltung des erfindungsgemäßen Magnetventils 10 mit einer blockierschutzgeregelten Fahrzeugbremsanlage ist in Figur 1 symbolisch dargestellt: Das erfindungsgemäße Magnetventil 10 ist in eine Hauptbremsleitung 78 eingeschaltet, die von einem Hauptbremszylinder 80 zu einem Radbremszylinder 82 führt, es dient als Einlaßventil des Radbremszylinders 82. Dabei kommuniziert der Hauptbremszylinder 80 über einen axial im Grund der Aufnahmebohrung 18 mündenden Fluidkanal 84, also mit der Axialbohrung 38 im Ventilsitzteil 36. Der Radbremszylinder 82 ist an einen radialen Fluidkanal 86 angeschlossen, der im Umfang der Aufnahmebohrung 18 mündet, also durch die Durchbrüche 70 und die Radialkanäle 68 des Endstücks 64 mit den Abströmkanälen 44 kommuniziert, die am Außenumfang des Ventilsitzteils 36 entlang führen. Das Rückschlagventil 74, 76 ist als Bypass-Ventil geschaltet, das vom Radbremszylinder 82 zum Hauptbremszylinder 80 hin durchströmbar ist.

Parallel zum Magnetventil 10 ist ein Auslaßventil 88 und eine Rückförderpumpe 90 in eine Rückleitung 92 eingeschaltet, die vom Radbremszylinder 82 zum Hauptbremszylinder 78 führt. Zwischen Auslaßventil 88 und Rückförderpumpe 90 ist ein Speicher 94 an die Rückleitung 92 angeschlossen. Die Bremsschlupfregelung erfolgt durch Bremsdruckmodulation mittels des als Einlaßventil dienenden Magnetventils 10, des Auslaßventils 88 und der Rückförderpumpe 90 in an sich bekannter Weise.

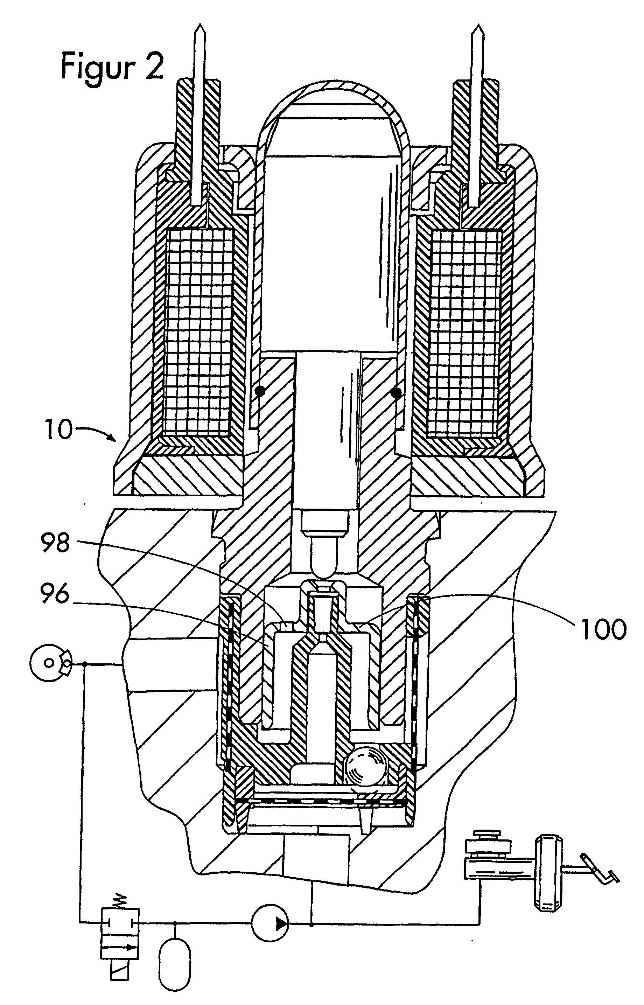

Bei der in Figur 2 dargestellten, abgewandelten Ausführungsform des erfindungsgemäßen Magnetventils 10 ist ein Ventilsitzteil 96 als gestuftes topfförmiges Tiefziehteil aus Blech ausgebildet. Es weist drei achsparallele Bohrungen 98 auf, die gleichmäßig über den Umfang verteilt in einer Ringstufe 100 des Ventilsitzteils 96 angebracht sind. Diese Bohrungen 98 ersetzen die Abströmkanäle 44 in der Durchgangsbohrung 12 des Ventilträgers 14 der in Figur 1 dargestellten Ausführungsform der Erfindung. Im übrigen ist das in Figur 2 dargestellte Magnetventil 10 gleich aufgebaut und funktioniert in gleicher Weise, wie das in Figur 1 dargestellte Magnetventil 10. Zur Vermeidung von Wiederholungen wird insoweit auf die Ausführungen zu Figur 1 verwiesen.

## Patentansprüche

1. Magnetventil (10) zum Einsetzen in eine Aufnahmebohrung (18) eines Hydraulikblocks (20) einer blockierschutzgeregelten, hydraulischen Fahrzeugbremsanlage,
- mit einem eine Durchgangsbohrung (12) aufweisenden Ventilträger (14), der in die Aufnahmebohrung (18) des Hydraulikblocks (20) einsetzbar ist,
- mit einem Ventildom (26), der koaxial zur Durchgangsbohrung (12) am Ventilträger (14) angebracht, in dem ein Anker (24) axial verschiebbar aufgenommen und der von einer Spule (32) umgriffen ist,
- mit einem Ventilstößel (28) zur Betätigung eines axial beweglichen Ventilschließkörpers (30), der am Anker (24) angeordnet ist und in die Durchgangsbohrung (12) des Ventilträgers (14) hineinragt, und
- mit einem Ventilsitzteil (36, 96), das an einer dem Anker (24) abgewandten Stirnseite in die Durchgangsbohrung (12) des Ventilträgers (14) eingesetzt ist und das eine Bohrung (38) aufweist, die von der dem Anker (24) abgewandten Stirnseite zu einem Ventilsitz (40) des Ventilsitzteils (36, 96) führt,
**dadurch gekennzeichnet,**
- **daß** der Ventilträger (14) frei von Hinterschneidungen ist,
- **daß** an der von dem Anker (24) abgewandten Stirnende des Ventilträgers (14) ein filterbestücktes, topfförmiges Endstück (46) aus faserverstärktem, thermoplastischem Kunststoff angebracht ist, welches den Ventilträger (14) stirn- und umfangsseitig umgreift und einen von der ankerabgewandten Stirnseite des Endstücks (46) zu der Bohrung (38) des Ventilsitzteils (36) führenden Durchlaß (56) sowie drei einstückig mit dem Endstück (46) ausgebildete Dichtungen (50, 52, 54) aufweist, von denen
- die erste Dichtung (50) zum Abdichten des Ventilträgers (14) am Grund der Aufnahmebohrung (18) im Hydraulikblock (20),
- die zweite Dichtung (54) dichtend am Ventilsitzteil (36) und
- die dritte Dichtung (52) zum Abdichten des Ventilträgers (14) im Bereich einer Mündung der Aufnahmebohrung (18) am Hydraulikblock (20) anliegt.

2. Magnetventil nach Anspruch 1, **dadurch gekennzeichnet, daß** die erste Dichtung (50) und die dritte Dichtung (52) umlaufend und mit axialem Abstand an einem Außenumfang des Endstücks (46) ausgebildet sind.

3. Magnetventil nach Anspruch 1 oder 2, **dadurch gekennzeichnet, daß** das Endstück (46) einen zapfenförmigen, mit ihm einstückigen Ansatz (48) aufweist, der in die Bohrung (38) des Ventilsitzteils (36) eingreift, durch den der Durchlaß (56) des Endstücks (46) hindurchgeht und an dessen Außenumfang die zweite Dichtung (54) ausgebildet ist, die dichtend in der Bohrung (38) des Ventilsitzteils (36) anliegt.

4. Magnetventil nach Anspruch 1, **dadurch gekennzeichnet, daß** das Endstück (46) ein Rückschlagventil (74, 76) aufweist.

5. Magnetventil nach Anspruch 1, **dadurch gekennzeichnet, daß** das Ventilsitzteil (96) ein Blech-Tiefziehteil ist.

6. Magnetventil nach Anspruch 1, **dadurch gekennzeichnet, daß** das Ventilsitzteil (36) aus Kunststoff besteht.

7. Magnetventil nach Anspruch 1, **dadurch gekennzeichnet, daß** der Durchlaß (56) des Endstücks (46) eine Drossel (58) aufweist.

8. Magnetventil nach Anspruch 1, **dadurch gekennzeichnet, daß** der Ventilträger (14) ein Fließpreßteil ist.

## Claims

1. Solenoid valve (10) for insertion into a receiving hole (18) in a hydraulic block (20) of a anti-lock-controlled hydraulic vehicle brake system,
- having a valve carrier (14) which has a through-hole (12) and which can be inserted into the receiving hole (18) of the hydraulic block (20),
- having a valve dome (26), which is attached to the valve carrier (14) coaxially with respect to the through-hole (12), said valve carrier (14) receiving an armature (24) in an axially displaceable fashion and having a coil (32) engaging around it,
- having a valve tappet (28) for actuating an axially movable valve closing element (30), which is arranged on the armature (24) and projects into the through-hole (12) of the valve carrier (14), and
- having a valve seat part (36, 96) which is inserted into the through-hole (12) of the valve carrier (14) on an end side facing away from the armature (24) and which has a hole (38) which leads from the end side facing away from the armature (24) to a valve seat (40) of the valve seat part (36, 96),
**characterized**
- **in that** the valve carrier (14) is free of undercuts,
- **in that** a pot-shaped endpiece (46) which is equipped with a filter and is composed of fibre-reinforced thermoplast is attached to the end side of the valve carrier (14) facing away from the armature (24), said endpiece (46) engaging around the valve carrier (14) at the ends and around the circumference and engaging around the passage (56) which leads from the end side of the endpiece (46) facing away from the armature to the hole (38) in the valve seat part (36), as well as three seals (50, 52, 54) which are formed integrally with the endpiece (46), of which
- the first seal (50) bears against the base of the receiving hole (18) in the hydraulic block (20) in order to seal the valve carrier (14),
- the second seal (54) bears against the valve seat part (36) in a seal-forming fashion, and
- the third seal (52) bears against the hydraulic block (20) in order to seal the valve carrier (14) in the region of an opening end in the receiving hole (18).

2. Solenoid valve according to Claim 1, **characterized in that** the first seal (50) and the third seal (52) are formed so that they extend along an outer circumference of the endpiece (46) with axial spacing.

3. Solenoid valve according to Claim 1 or 2, **characterized in that** the endpiece (46) has a pin-shaped projection (48) which is integral with it, which engages in the hole (38) in the valve seat part (36) and through which the passage (56) in the endpiece (46) passes and on whose outer circumference the second seal (54), which bears in the hole (38) in the valve seat part (36) in a seal-forming fashion, is formed.

4. Solenoid valve according to Claim 1, **characterized in that** the endpiece (46) has a non-return valve (74, 76).

5. Solenoid valve according to Claim 1, **characterized in that** the valve seat part (96) is a sheet-metal deep-drawn part.

6. Solenoid valve according to Claim 1, **characterized in that** the valve seat part (36) is composed of plastic.

7. Solenoid valve according to Claim 1, **characterized in that** the passage (56) in the endpiece (46) has a throttle (58).

8. Solenoid valve according to Claim 1, **characterized in that** the valve carrier (14) is an extruded part.

## Revendications

1. Electrovanne (10) destinée à être installée dans un perçage de réception (18) d'un bloc hydraulique (20) d'une installation de frein de véhicule, hydraulique, à régulation anti-blocage comprenant :
- un support d'électrovanne (14) comportant un perçage traversant (12), qui se place dans le perçage de réception (18) du bloc hydraulique (20),
- un dôme de vanne (26), coaxial au perçage traversant (12) du support de vanne (14), qui reçoit un induit (24), coulissant axialement, en étant entouré par une bobine (32),
- un poussoir de vanne (28) pour actionner un organe d'obturation de vanne (30) mobile axialement, ce poussoir étant porté par l'induit (24) et pénétrant dans le perçage traversant (12) du support de vanne (14), et
- une partie formant siège de soupape (36, 96), prévue sur une face frontale à l'opposé de l'induit (24) dans le perçage traversant (12) du support de vanne (14), et comportant un perçage (38) allant de la face frontale à l'opposé de l'induit (24) jusqu'au siège de soupape (40) de la pièce formant siège de soupape (36, 96),
**caractérisée en ce que**
- le support de vanne (14) ne comporte pas de contre dépouille,
- l'extrémité frontale du support de vanne (14) à l'opposé de l'induit (24) comporte un embout (46) en forme de pot, garni d'un filtre, cet embout étant en matière thermoplastique renforcée par des fibres, et il entoure le support de vanne (14) sur sa face frontale et sa périphérie et comporte un passage (56) allant de la face frontale de l'embout (46) à l'opposé de l'induit jusqu'au perçage (38) de la partie formant siège de soupape (36), ainsi que trois joints (50, 52, 54) faisant corps avec l'embout (46), et parmi lesquels,
- le premier joint (50) assure l'étanchéité entre le support de vanne (14) et le fond (18) du perçage du bloc hydraulique (20),
- le second joint (54) est appliqué de manière étanche contre la pièce formant siège de soupape (36), et
- le troisième joint (52) est appliqué contre le bloc hydraulique (20) pour assurer l'étanchéité du support de vanne (14) au niveau de l'embouchure du perçage de réception (18).

2. Electrovanne selon la revendication 1,
**caractérisée en ce que**
le premier joint (50) et le troisième joint (52) sont périphériques et sont réalisés à la périphérie extérieure de l'embout (46) en étant écartés d'une distance axiale.

3. Electrovanne selon les revendications 1 ou 2,
**caractérisée en ce que**
l'embout (46) comporte un prolongement (48) en une seule pièce, en forme de bouchon, qui pénètre dans le perçage (38) de la pièce formant siège de soupape (36), traverse le passage (56) de l'embout (46) et présente sur sa périphérie extérieure un second joint (54) qui s'applique de manière étanche dans le perçage (38) de la pièce formant siège de soupape (36).

4. Electrovanne selon la revendication 1,
**caractérisée en ce que**
l'embout (46) comporte un clapet anti-retour (74, 76).

5. Electrovanne selon la revendication 1,
**caractérisé en ce que**
la pièce formant siège de soupape (96) est une pièce en tôle réalisée par emboutissage profond.

6. Electrovanne selon la revendication 1,
**caractérisée en ce que**
la pièce formant siège de soupape (36) est en matière plastique.

7. Electrovanne selon la revendication 1,
**caractérisée en ce que**
le passage (56) de l'embout (46) comporte un organe d'étranglement (58).

8. Electrovanne selon la revendication 1,
**caractérisée en ce que**
le support de vanne (14) est une pièce obtenue par fluage à la presse.
